# EUROPEAN PATENT APPLICATION

(11) **EP 4 852 349 A1**
(43) Date of publication of application: **09.12.2026**
(21) Application number: 25767162.8
(22) Date of filing: 13.02.2025
(51) Int. Cl.: H04B 17/345

(54) **TEST METHOD AND RELATED DEVICE**

(30) Priority: 06.03.2024 CN 202410260023
(71) Applicant: HUAWEI TECHNOLOGIES CO., LTD., Shenzhen, Guangdong 518129 (CN)
(72) Inventor: YAN, Yiming, Shenzhen, Guangdong 518129 (CN); YU, Tao, Shenzhen, Guangdong 518129 (CN); SHEN, Kan, Shenzhen, Guangdong 518129 (CN); FAN, Donglei, Shenzhen, Guangdong 518129 (CN)
(74) Representative: Huawei European IPR
(86) International application number: PCT/CN2025/077099
(87) International publication number: WO 2025/185419

(57) **Abstract**

Embodiments of this application provide a testing method and a related device, and relate to the testing field. In the method, a first device is controlled to send, over an air interface, first data to a second device. A first interference signal is generated based on a scenario factor of an interference scenario, where the scenario factor of the interference scenario is used to represent a characteristic of the interference scenario. Data transmitted over the air interface is obtained. A first anti-interference parameter of each of the first device and the second device is determined based on the data transmitted over the air interface. The first anti-interference parameter is used to represent anti-interference performance of the first device and the second device. This solution can perform an automated anti-interference test on a wireless communication device, thereby improving a degree of automation in anti-interference tests and testing efficiency of the wireless communication device.

## Description

This application claims priority to Chinese Patent Application No. 202410260023.X, filed with the China National Intellectual Property Administration on March 6, 2024 and entitled "TESTING METHOD AND RELATED DEVICE", which is incorporated herein by reference in its entirety.

### TECHNICAL FIELD

Embodiments of this application relate to the testing field, and in particular, to a testing method and a related device.

### BACKGROUND

When an anti-interference capability of a Bluetooth audio device is insufficient, the Bluetooth audio device cannot operate properly due to impact of an interference source in a 2.4 GHz to 2.8 GHz frequency band in a surrounding environment, affecting use effects of the Bluetooth audio device. In addition, the Bluetooth audio device has a low degree of automation in anti-interference tests.

### SUMMARY

This application provides a testing method and a related device, to improve a degree of automation in anti-interference tests of a wireless communication device.

According to a first aspect, a testing method is provided. The method may be performed by a testing device, or may be performed by a chip in the testing device.

The testing method includes the following steps: controlling a first device to send, over an air interface, first data to a second device; generating a first interference signal based on a scenario factor of an interference scenario, where the scenario factor of the interference scenario is used to represent a characteristic of the interference scenario; obtaining data transmitted over the air interface; and determining a first anti-interference parameter of each of the first device and the second device based on the data transmitted over the air interface.

The first anti-interference parameter is used to represent anti-interference performance of the first device and the second device.

It can be learned that, in this solution, the first device is controlled to send, over the air interface, data to the second device, and the first interference signal is generated, so as to obtain data transmitted over the air interface under an effect of the first interference signal. The first anti-interference parameter of each of the first device and the second device can be determined based on the data transmitted over the air interface, so that an automated anti-interference test on a wireless communication device can be implemented, and a degree of automation in the anti-interference tests and testing efficiency of the wireless communication device can be improved.

For example, the first device is controlled to send, over the air interface, the first data to the second device, and simultaneously, generation of the first interference signal is controlled. For another example, generation of the first interference signal is first controlled, and then the first device is controlled to send, over the air interface, the first data to the second device.

In a possible implementation of the first aspect, when the first data is first audio data, the testing method may further include the following steps: obtaining second audio data received by the second device from the first device over an air interface; and determining a quantity of audio stutters based on the first audio data and the second audio data.

In this solution, the quantity of audio stutters can be determined based on the first audio data sent by the first device and the second audio data received by the second device. Determining the quantity of audio stutters based on the audio data achieves high accuracy and a low false positive rate.

In a possible implementation of the first aspect, the determining the quantity of audio stutters based on the first audio data and the second audio data includes the following steps: determining a first feature value corresponding to each audio frame in the first audio data; determining a second feature value corresponding to each audio frame in the second audio data; and determining the quantity of audio stutters based on the first feature value and the second feature value.

In this solution, feature detection is performed based on the first audio data and the second audio data to obtain the first feature value and the second feature value, and the quantity of audio stutters is determined based on the first feature value and the second feature value. Audio feature detection is performed on the audio data, so that the quantity of audio stutters can be more accurately calculated.

In a possible implementation of the first aspect, the testing method further includes the following step: obtaining a first distance between the first device and the second device; where the first anti-interference parameter is an anti-interference parameter corresponding to a distance between the first device and the second device being the first distance.

In this solution, during testing, a physical distance between the first device and the second device may be adjusted, to test anti-interference parameters at different physical distances.

In a possible implementation of the first aspect, the testing method further includes the following step: obtaining a first rotation angle of the second device; where the first anti-interference parameter is an anti-interference parameter corresponding to a rotation angle of the second device being the first rotation angle.

In this solution, during testing, the rotation angle of the second device may be adjusted, to test anti-interference parameters at different rotation angles (that is, poses).

In a possible implementation of the first aspect, an air interface transmission manner between the first device and the second device includes at least one of the following: NearLink, Bluetooth, wireless local area network, ZigBee, or near field communication NFC.

When NearLink is used as the air interface transmission manner, a NearLink anti-interference capability evaluation standard can be provided by applying the testing method in this application, thereby facilitating research and development of the NearLink technology.

According to a second aspect, this application further provides a testing device, including a control module, a generation module, an obtaining module, and a determining module.

The control module is configured to control a first device to send, over an air interface, first data to a second device.

The generation module is configured to generate a first interference signal based on a scenario factor of an interference scenario, where the scenario factor of the interference scenario is used to represent a characteristic of the interference scenario.

The obtaining module is configured to obtain data transmitted over the air interface.

The determining module is configured to determine a first anti-interference parameter of each of the first device and the second device based on the data transmitted over the air interface.

In this solution, the testing device controls the first device to send, over the air interface, data to the second device, and generates the first interference signal, so as to obtain data transmitted over the air interface under an effect of the first interference signal. The first anti-interference parameter of each of the first device and the second device can be determined based on the data transmitted over the air interface, so that the testing device can implement an automated anti-interference test on a wireless communication device, and improve a degree of automation in the anti-interference tests and testing efficiency of the wireless communication device.

In a possible implementation of the second aspect, when the first data is first audio data, the obtaining module is further configured to obtain second audio data received by the second device from the first device over an air interface; and the determining module is further configured to determine a quantity of audio stutters based on the first audio data and the second audio data.

In a possible implementation of the second aspect, in terms of determining the quantity of audio stutters based on the first audio data and the second audio data, the determining module is specifically configured to: determine a first feature value corresponding to each audio frame in the first audio data; determine a second feature value corresponding to each audio frame in the second audio data; and determine the quantity of audio stutters based on the first feature value and the second feature value.

In a possible implementation of the second aspect, the obtaining module is further configured to obtain a first distance between the first device and the second device; where the first anti-interference parameter is an anti-interference parameter corresponding to a distance between the first device and the second device being the first distance.

In a possible implementation of the second aspect, the obtaining module is further configured to obtain a first rotation angle of the second device; where the first anti-interference parameter is an anti-interference parameter corresponding to a rotation angle of the second device being the first rotation angle.

In a possible implementation of the second aspect, an air interface transmission manner between the first device and the second device includes at least one of the following: NearLink, Bluetooth, wireless local area network, ZigBee, or near field communication NFC.

According to a third aspect, this application further provides a testing device, including a processor and a memory. The processor is connected to the memory, the memory is configured to store program code, and the processor is configured to invoke the program code, to perform the testing method according to the first aspect.

According to a fourth aspect, this application further provides a testing system. The testing system includes a first device, a second device, an interference module, an air interface data obtaining module, and the testing device according to the second aspect or the third aspect. The interference module is configured to generate a first interference signal; and the air interface data obtaining module is configured to acquire data transmitted by the first device over an air interface.

In this application, the testing system may be used to implement automated anti-interference tests on wireless communication devices (to be specific, the first device and the second device), thereby improving a degree of automation in anti-interference tests and testing efficiency of the wireless communication devices.

In a possible implementation of the fourth aspect, when first data sent by the first device to the second device is first audio data, the system further includes an audio acquisition module, configured to acquire second audio data received by the second device from the first device over an air interface.

In this solution, the second audio data can be obtained by using the audio acquisition module. In this way, the testing device can determine a quantity of audio stutters based on the first audio data sent by the first device and the second audio data received by the second device. Determining the quantity of audio stutters based on the audio data achieves high accuracy and a low false positive rate.

In a possible implementation of the fourth aspect, the testing system further includes a pose adjustment module, configured to adjust a pose of the second device. The pose may be understood as a rotation angle of the second device. The rotation angle may be a rotation angle in a left-right direction, or may be a rotation angle in an up-down direction, or may be a rotation angle in both the up-down and left-right directions. For example, the pose adjustment module may be a 360° turntable or a gimbal.

In a possible implementation of the fourth aspect, the system further includes a distance adjustment module, configured to adjust a distance between the first device and the second device.

According to a fifth aspect, this application further provides a computer-readable storage medium. The computer-readable storage medium stores a computer program, and the computer program is executed by a processor to implement the testing method according to the first aspect.

According to a sixth aspect, this application further provides a computer program product including instructions. When the computer program product runs on a computer, the computer is enabled to perform the testing method according to the first aspect.

According to a seventh aspect, this application further provides a chip. The chip includes a processor and a data interface, and the processor reads, over the data interface, instructions stored in a memory, to perform the testing method according to the first aspect.

Optionally, in an implementation, the chip may further include the memory. The memory stores the instructions. The processor is configured to execute the instructions stored in the memory. When the instructions are executed, the processor is configured to perform the testing method according to the first aspect.

### BRIEF DESCRIPTION OF DRAWINGS

The following describes the accompanying drawings used in embodiments of this application.
FIG. 1A is a diagram of a structure of a first device according to an embodiment of this application;
FIG. 1B is a schematic flowchart of a testing method according to an embodiment of this application;
FIG. 2 is a schematic flowchart of training a feature factor extraction model according to an embodiment of this application;
FIG. 3 is a diagram of a structure of a testing system according to an embodiment of this application;
FIG. 4 is a diagram of a structure of another testing system according to an embodiment of this application;
FIG. 5 is a diagram of a structure of a testing device according to an embodiment of this application; and
FIG. 6 is a diagram of a structure of another testing device according to an embodiment of this application.

### DESCRIPTION OF EMBODIMENTS

The following describes technical solutions of this application with reference to accompanying drawings.

In embodiments of this application, the term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, "A and/or B" may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first device and a second device are merely for ease of description, and do not indicate a difference between the first device and the second device in terms of a structure and importance. In some embodiments, the first device and the second device may alternatively be the same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

When an anti-interference capability of a Bluetooth audio device is insufficient, the Bluetooth audio device cannot operate properly due to impact of an interference source in a 2.4 GHz to 2.8 GHz frequency band in a surrounding environment, affecting use effects of the Bluetooth audio device. For example, the Bluetooth audio device is a mobile phone and a Bluetooth headset. When a user plays music by using the mobile phone via Bluetooth, the user may listen to the music wirelessly by wearing the Bluetooth headset. When the mobile phone and the Bluetooth headset are subjected to interference, the user may feel that music playback stutters, affecting user experience. Therefore, it is necessary to perform an anti-interference test on the Bluetooth audio device to help test the anti-interference capability of the device to further improve user experience. However, the Bluetooth audio device has a low degree of automation in anti-interference tests.

Therefore, an embodiment of this application provides a testing method, to improve a degree of automation in anti-interference tests on a wireless communication device.

The testing method may be performed by a testing device, or may be performed by a chip in the testing device. The testing device may be a device such as a desktop computer or a notebook computer.

The testing method in embodiments of this application may be applied to automated anti-interference tests on various wireless communication devices. The foregoing wireless communication includes Bluetooth (Bluetooth), NearLink (NearLink), a wireless local area network (Wireless Local Area Network, WLAN) (such as a wireless fidelity (Wireless Fidelity, Wi-Fi) network), ZigBee (ZigBee), near field communication (Near Field Communication, NFC), and the like.

NearLink is a wireless short-distance communication technology used for carrying data exchanges for application scenarios in the fields of smart cars, intelligent terminals, smart homes, smart manufacturing, and the like. A NearLink wireless communication system includes a NearLink access layer, a basic service layer, and a basic application layer. The NearLink access layer includes two parts: SparkLink Basic (SparkLink Basic, SLB) and SparkLink Low Energy (SparkLink Low Energy, SLE). The SLB may be regarded as Wi-Fi, but features a higher speed, lower latency, and larger-volume data transmission. The SLE may be understood as Bluetooth, but has lower power consumption. The SLB and SLE provide different transmission services to meet different service requirements. They complement each other.

Wi-Fi is based on the IEEE 802.11 standard, and provides high-speed data transmission services by wirelessly connecting personal computers, smartphones, and tablet computers. Wi-Fi is often used in public places such as homes, offices, cafes, and libraries. A user can access the internet through Wi-Fi to perform operations such as browsing web pages, downloading data, and watching online videos.

Zigbee is a low-speed, short-distance, and low-power wireless communication technology based on the IEEE 802.15.4 standard. It is mainly used for wireless communication of internet of things devices. Its name comes from bees' "Zigzag" dance, which is a way the bees use to communicate locations of food sources. Compared with wireless communication technologies such as Wi-Fi and Bluetooth, ZigBee is characterized by low power consumption, low costs, and self-networking. It is widely used in the fields of smart homes, industrial automation, agricultural internet of things, and the like.

Near field communication is a non-contact wireless communication technology, which can perform high-rate bidirectional data transmission in a short range. The NFC uses a bidirectional authentication mechanism and an encrypted communication mechanism, and therefore has higher security and reliability.

In embodiments of this application, the wireless communication devices include a first device and a second device.

In a possible implementation, the first device may be a device such as a mobile phone, a tablet computer, or a wearable device, and the second device may be a device such as a Bluetooth headset or a sensor.

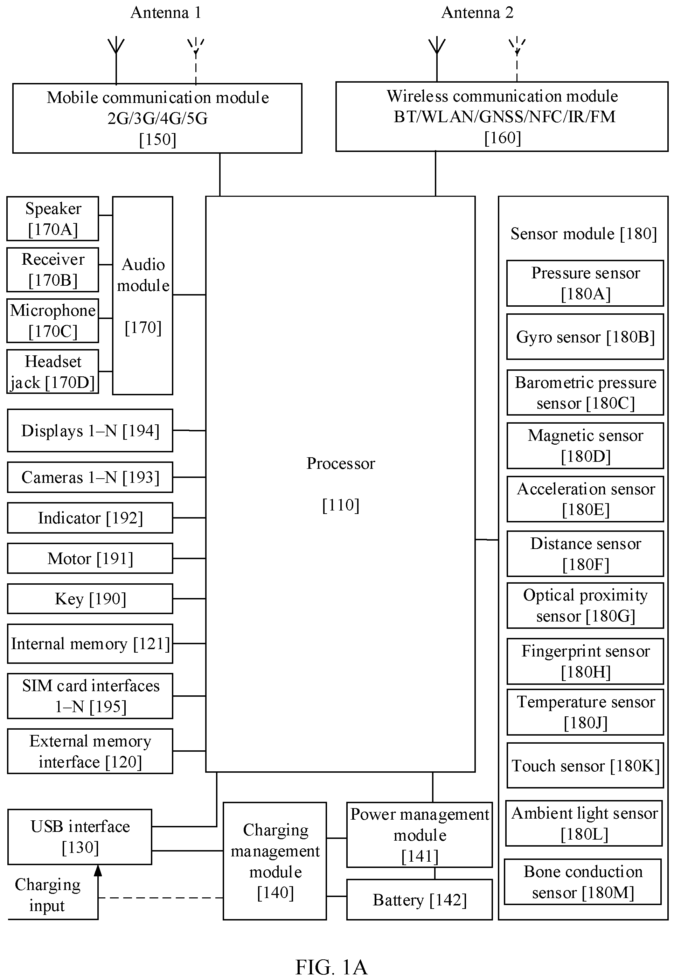

For example, FIG. 1A is a diagram of a structure of a first device according to an embodiment of this application. The first device may have more or fewer components than those shown in FIG. 1A, may combine two or more components, or may have different component configurations. Various components shown in FIG. 1A may be implemented in hardware including one or more signal processing circuits and/or application-specific integrated circuits, software, or a combination of hardware and software.

The first device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (Subscriber Identification Module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a multispectral sensor, and the like.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a memory, a video codec, a digital signal processor (Digital Signal Processor, DSP), a baseband processor, and/or a neural-network processing unit (Neural-network Processing Unit, NPU). Different processing units may be independent components, or may be integrated into one or more processors.

The controller may be a nerve center and a command center of the first device. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (Inter-integrated Circuit, I2C) interface, an inter-integrated circuit sound (Inter-integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a USB interface, and/or the like.

The I2C interface is a two-way synchronization serial bus, and includes one serial data line (Serial Data Line, SDA) and one serial clock line (Serial Clock Line, SCL).

The I2S interface may be configured to perform audio communication.

The PCM interface may also be used to perform audio communication, and sample, quantize, and encode an analog signal.

The UART interface is a universal serial data bus, and is configured to perform asynchronous communication. The bus may be a two-way communication bus. The bus converts to-be-transmitted data between serial communication and parallel communication.

The MIPI interface may be configured to connect the processor 110 to a peripheral component such as the display 194 or the camera 193. The MIPI interface includes a camera serial interface (Camera Serial Interface, CSI), a display serial interface (Display Serial Interface, DSI), and the like.

The GPIO interface may be configured by software. The GPIO interface may be configured as a control signal or a data signal.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB type-C interface, or the like.

It may be understood that an interface connection relationship between the modules that is shown in embodiments of this application is merely an example for description, and does not constitute a limitation on a structure of the first device. In some other embodiments of this application, the first device may alternatively use an interface connection manner different from that in the foregoing embodiments, or a combination of a plurality of interface connection manners.

The charging management module 140 is configured to receive a charging input from a charger.

The power management module 141 is configured to connect the battery 142, the charging management module 140, and the processor 110, to supply power to the external memory, the display 194, the camera 193, the wireless communication module 160, and the like.

A wireless communication function of the first device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first device may be configured to cover one or more communication frequency bands. Different antennas may be further multiplexed, to improve antenna utilization.

The mobile communication module 150 may provide a solution that includes wireless communication such as 2G, 3G, 4G, and 5G and that is applied to the first device. The mobile communication module 150 may include at least one filter, a switch, a power amplifier, a low noise amplifier (Low Noise Amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first device and that includes a wireless local area network (for example, a Wi-Fi network), Bluetooth, an infrared (Infrared, IR) technology, NearLink, ZigBee, NFC, and the like.

In some embodiments, the antenna 1 and the mobile communication module 150 in the first device are coupled, and the antenna 2 and the wireless communication module 160 in the first device are coupled, so that the first device can communicate with a network and another device by using a wireless communication technology. The wireless communication technology may include a global system for mobile communications (Global System for Mobile Communications, GSM), a general packet radio service (General Packet Radio Service, GPRS), and the like.

The first device implements a display function via the GPU, the display 194, the application processor, and the like. The GPU is a microprocessor for image processing, and is connected to the display 194 and the application processor. The GPU is configured to perform mathematical and geometric computation, to render an image. The processor 110 may include one or more GPUs, which execute program instructions to generate or change display information.

The display 194 is configured to display an image, a video, and the like. The display 194 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light-Emitting Diode, AMOLED), a flexible light-emitting diode (Flexible Light-Emitting Diode, FLED), a mini-LED, a micro-LED, a micro-OLED, a quantum dot light-emitting diode (Quantum Dot Light-Emitting Diode, QLED), or the like. In some embodiments, the first device may include one or N displays 194, where N is a positive integer greater than 1.

The first device may implement a photographing function through the ISP, the camera 193, the video codec, the GPU, the display 194, the application processor, and the like.

The ISP is configured to process data fed back by the camera 193. For example, during photographing, a shutter is pressed, and an optical signal is transmitted to a photosensitive element of the camera through a lens. The optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scene. In some embodiments, the ISP may be disposed in the camera 193. The photosensitive element may also be referred to as an image sensor.

The camera 193 is configured to capture a static image or a video. An optical image of an object is generated through the lens, and is projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transmits the electrical signal to the ISP to convert it into a digital image signal. The ISP outputs the digital image signal to the DSP for processing. The DSP converts the digital image signal into an image signal in a standard format such as RGB or YUV. In some embodiments, the first device may include one or N cameras 193, where N is a positive integer greater than 1.

The digital signal processor is configured to process a digital signal, and may process another digital signal in addition to the digital image signal. For example, when the first device processes a speech signal, the digital signal processor is configured to perform Fourier transformation and the like on the speech signal.

The video codec is configured to compress or decompress a digital video. The first device may support one or more video codecs. In this way, the first device may play or record videos in a plurality of coding formats, for example, moving picture experts group (Moving Picture Experts Group, MPEG)-1, MPEG-2, MPEG-3, and MPEG-4.

The NPU is a neural-network computing processor, quickly processes input information by referring to a structure of a biological neural network, for example, a mode of transmission between human brain neurons, and may further continuously perform self-learning. Applications such as intelligent cognition of the first device may be implemented by using the NPU, for example, image recognition, facial recognition, speech recognition, and text understanding.

The external memory interface 120 may be configured to connect to an external storage card, for example, a micro SD card, to extend a storage capability of the first device.

The internal memory 121 may be configured to store computer-executable program code. The executable program code includes instructions. The processor 110 performs various function applications and data processing of the first device by running the instructions stored in the internal memory 121. The internal memory 121 may include a program storage area and a data storage area.

The first device may implement an audio function, for example, music playing and recording, through the audio module 170, the speaker 170A, the receiver 170B, the microphone 170C, the headset jack 170D, the application processor, and the like. In the embodiments, the first device may include n microphones 170C, where n is a positive integer greater than or equal to 2.

The audio module 170 is configured to convert digital audio information into an analog audio signal for output, and is also configured to convert an analog audio input into a digital audio signal.

The ambient light sensor 180L is configured to sense ambient light brightness. The first device may adaptively adjust brightness of the display 194 based on the sensed ambient light brightness. The ambient light sensor 180L may also be configured to automatically adjust white balance during photographing.

The motor 191 may generate a vibration prompt. The motor 191 may be configured to provide a vibration prompt for an incoming call, and may also be configured to provide vibration feedback for a touch. For example, touch operations performed on different applications (for example, photographing and audio playing) may correspond to different vibration feedback effects.

In embodiments of this application, the processor 110 may invoke the computer instructions stored in the internal memory 121, so that the first device performs related steps (for example, sending first data) in the testing method in embodiments of this application.

The following specifically describes the testing method in embodiments of this application.

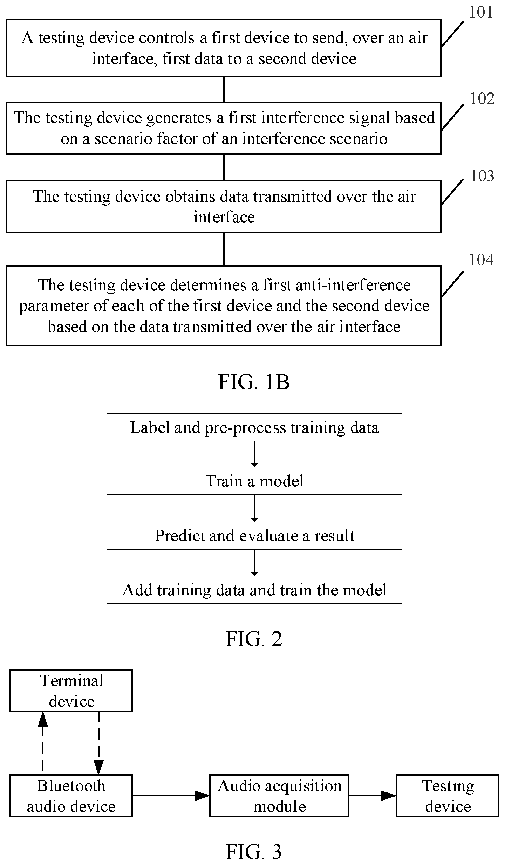

FIG. 1B is a schematic flowchart of a testing method according to an embodiment of this application. In embodiments of this application, for example, a testing device serves as an execution body, and the testing method includes the following steps.

101: The testing device controls a first device to send, over an air interface, first data to a second device.

Specifically, performing data sending over the air interface as described above is performing wireless communication between the first device and the second device. A manner of the foregoing air interface transmission includes at least one of the following: Bluetooth, NearLink, a wireless local area network, ZigBee, NFC, or the like. In other words, the testing method in embodiments of this application is applicable to anti-interference tests on various wireless communication devices.

A specific type of the first data is not specifically limited. For example, the first data may be audio data, video data, text data, location data, control data, or sensor data.

102: The testing device generates a first interference signal based on a scenario factor of an interference scenario.

The scenario factor of the interference scenario is used to represent a characteristic of the interference scenario. The first interference signal conforms to an interference characteristic of the foregoing interference scenario. In other words, the scenario factor of the interference scenario may be used to generate the first interference signal that is close to a real-word interference signal in the interference scenario.

For example, the testing device may control the first device to send, over the air interface, the first data to the second device, and simultaneously, controls generation of the first interference signal. For another example, the testing device may first control generation of the first interference signal, and then control the first device to send, over the air interface, the first data to the second device. Both manners above can ensure that the first interference signal interferes with the wireless communication between the first device and the second device.

103: The testing device obtains data transmitted over the air interface.

104: The testing device determines a first anti-interference parameter of each of the first device and the second device based on the data transmitted over the air interface.

The first anti-interference parameter is used to represent anti-interference performance of the first device and the second device. The anti-interference performance of the first device and the second device may be evaluated based on the first anti-interference parameter. For example, when the first anti-interference parameter meets a specific condition, it indicates that the anti-interference performance of the first device and the second device is excellent; or otherwise, the anti-interference performance of the first device and the second device is poor.

In embodiments of this application, the testing device controls the first device to send, over the air interface, data to the second device, and generates the first interference signal, so as to obtain data transmitted over the air interface under an effect of the first interference signal. The first anti-interference parameter of each of the first device and the second device can be determined based on the data transmitted over the air interface, so that an automated anti-interference test on a wireless communication device can be implemented, and a degree of automation in the anti-interference tests and testing efficiency of the wireless communication device can be improved.

In a possible implementation, the testing method further includes the following step:

The testing device obtains a first distance between the first device and the second device. The first anti-interference parameter is an anti-interference parameter corresponding to a distance between the first device and the second device being the first distance.

Specifically, the testing device may adjust the distance between the first device and the second device, for example, by using a device such as a slide rail. This is not specifically limited.

In embodiments of this application, during testing, a physical distance between the first device and the second device may be adjusted, to test anti-interference parameters at different physical distances.

In a possible implementation, the testing method further includes the following step:

The testing device obtains a first rotation angle of the second device. An anti-interference parameter obtained when a rotation angle of the second device is the first rotation angle is the foregoing first anti-interference parameter.

Specifically, the testing device may adjust the rotation angle of the second device, for example, by using a device such as a 360° turntable or a gimbal. This is not specifically limited. The rotation angle may be a rotation angle in a left-right direction, or may be a rotation angle in an up-down direction, or may be a rotation angle in both the up-down and left-right directions.

In embodiments of this application, during testing, the rotation angle of the second device may be adjusted, to test anti-interference parameters at different rotation angles (that is, poses).

In embodiments of this application, to simulate more interference scenarios, data of a plurality of real-word scenarios is first obtained, then feature factors corresponding to the real-word scenarios are extracted, and subsequently, scenario factors corresponding to different interference scenarios are obtained based on a combination of feature factors. By using scenario factors of different interference scenarios, interference statuses in the different interference scenarios can be simulated to test an anti-interference capability of a wireless communication device in the different interference scenarios.

Specifically, training data used to train a feature factor extraction model is first obtained, and the model is trained by using the training data, until recognition accuracy of the feature factor extraction model reaches 90% or above. FIG. 2 is a schematic flowchart of training a feature factor extraction model according to an embodiment of this application. After training data is labeled and pre-processed, an initial model is trained. A model prediction result corresponding to the training data can be obtained, and a training effect of the model can be evaluated based on the model prediction result. If the training effect of the model does not meet a requirement, training data is added and training on the model is continued, until recognition accuracy of the model reaches 90% or above.

After the feature factor extraction model is obtained, related data of a plurality of realistic scenarios is obtained, and then the feature factor extraction model is used to extract feature factors of the real-word scenarios. In this way, an interference scenario baseline library is constructed. Based on service interference features, the real-word interference scenarios are subjected to instantiated modeling to ensure consistency of interference sources. This implements normalization of complex interference scenarios, standardization of test capabilities, and baselining of test cases, thereby enabling reproducible test results, consistent test standards, and high-confidence evaluation conclusions.

The feature factor includes service networking, a service type, a service feature, an interference spectrum, an interference channel, interference networking, a device type, or the like. Different combinations of feature factors are made to generate scenario factors of a plurality of interference scenarios, to obtain, an interference scenario model. The foregoing interference scenarios include typical interference scenarios such as a railway station scenario (multi-user and low-traffic), a home scenario, an airport scenario, a shopping mall office scenario, and a quantitative scenario (a fixed/varying channel model), to implement full coverage of interference scenarios and ensure reproducible test results. For example, different values of various feature factors are combined to obtain various interference scenario models. For example, an interference scenario model A corresponds to fixed interference and an unchanged interference channel. An interference scenario model B features changing interference and a changing interference channel. An interference scenario model C features complex interference, which is interference from field recording and playback.

Embodiments of this application provide models of at least two interference scenarios. The interference scenarios are diversified, so that anti-interference capabilities of a wireless communication device in different interference scenarios can be tested.

For example, the first anti-interference parameter is a related anti-interference parameter that can be determined based on data transmitted over an air interface. For example, the first anti-interference parameter includes at least one of air interface data transmission accuracy, an interference shielding time, an interference recovery time, or the like.

The air interface data transmission accuracy refers to accuracy of data packets successfully transmitted by a device (the first device or the second device) in a time period. A specific value of the time period may be determined based on an actual situation, and is not specifically limited. The interference shielding time refers to a response time from receiving an interference signal by a device to completely avoiding the interference signal by the device. The interference recovery time refers to a time from interference signal cessation (disappearance) to resumption of data transmission by the device on an original channel. The foregoing three parameters are obtained by capturing air interface data by using a packet capture tool.

In a possible implementation, when the first data is first audio data, the testing method in embodiments of this application further includes: obtaining a second anti-interference parameter of each of the first device and a second device. The second anti-interference parameter is a related anti-interference parameter obtained based on data received by the second device. For example, the second anti-interference parameter includes at least one of a quantity of audio stutters, transmission latency, or the like. The transmission latency is a time required for data to reach a receiver from a sender, that is, transmission latency of sending data from the first device to the second device.

For example, the first audio data may be single-tone audio data or multi-tone audio data. Single-tone audio refers to audio with only one note or tone, such as a "beep" sound or a single instrument sound. In contrast, multi-tone audio includes a plurality of notes or tones, for example, a piece of music or a piece of speech.

In a possible implementation, the testing method further includes the following steps:

The testing device obtains second audio data received by the second device from the first device over an air interface.

The testing device determines a quantity of audio stutters based on the first audio data and the second audio data.

Specifically, the second audio data may be acquired by using an audio acquisition module. For example, the second audio data may be audio data received by the second device from the first device over an air interface. In this circumstance, the testing device may be connected to the second device through an audio cable to obtain the second audio data. In this case, the audio acquisition module is the audio cable. Alternatively, the second audio data is recorded audio data obtained by using an audio recording device (that is, the audio acquisition module) to perform audio acquisition on audio data received by the second device from the first device over an air interface.

For example, FIG. 3 is a diagram of a structure of a testing system according to an embodiment of this application. The testing system includes a testing device, an interference module, an audio acquisition module, a Bluetooth audio device, and a terminal device. The terminal device may be a mobile phone, a tablet computer, a wearable device, or the like. The terminal device is a first device in embodiments of this application. The Bluetooth audio device may be a Bluetooth headset or the like. The Bluetooth audio device is a second device in embodiments of this application. For example, in a test process, the testing device first controls the terminal device and the Bluetooth audio device to enter a pairing mode, to establish a Bluetooth connection between the terminal device and the Bluetooth audio device. After controlling the interference module to generate a first interference signal, the testing device controls the terminal device to play first audio data (that is, send the first audio data) via Bluetooth. The Bluetooth audio device receives audio data from the terminal device via Bluetooth. The audio acquisition module acquires audio received by the Bluetooth audio device to obtain recorded audio data. The audio acquisition module sends the recorded audio data to the testing device. The testing device may determine a quantity of audio stutters based on the first audio data and the recorded audio data.

In embodiments of this application, the quantity of audio stutters can be determined based on the first audio data sent by the first device and the second audio data received by the second device. Determining the quantity of audio stutters based on the audio data achieves high accuracy and a low false positive rate.

In a possible implementation, the determining, by the testing device, the quantity of audio stutters based on the first audio data and the second audio data specifically includes the following steps:
The testing device determines a first feature value corresponding to each audio frame in the first audio data.

Specifically, the testing device performs feature extraction on each audio frame in the first audio data by using an audio feature extraction algorithm, to obtain the first feature value corresponding to each audio frame. For example, the audio feature extraction algorithm includes a decoding function, and the testing device performs feature detection on the first audio data by using the decoding function, to obtain the first feature value of each frame in the first audio data.

The testing device determines a second feature value corresponding to each audio frame in the second audio data.

Specifically, the testing device performs feature extraction on each audio frame in the second audio data by using the audio feature extraction algorithm, to obtain the second feature value corresponding to each audio frame.

The testing device determines the quantity of audio stutters based on the first feature value and the second feature value.

Specifically, based on a comparison between the first feature value and the second feature value, a frame segment with an abnormal feature value may be found and marked in frames of the second audio data, so as to determine whether an audio stutter occurs in each frame. According to embodiments of this application, automated detection of audio smoothness can be implemented, and a stutter within 2 ms (a stutter interval that can be sensed by human ears) can be identified, without relying on human ears for subjective judgment, so that the quantity of audio stutters can be detected in an automated manner, detection accuracy is high, and a false positive rate is low. In addition, anti-interference testing efficiency of a wireless communication device can be improved, and the testing method is not limited by an audio technology, and audio smoothness of a plurality of audio codecs can be tested.

In embodiments of this application, feature detection is performed based on the first audio data and the second audio data to obtain the first feature value and the second feature value, and the quantity of audio stutters is determined based on the first feature value and the second feature value. Audio feature detection is performed on the audio data, so that the quantity of audio stutters can be more accurately calculated.

In a possible embodiment, the first audio data includes a data sending time. Therefore, the second audio data also includes a data sending time, and a data receiving time of the second audio data is also recorded. Transmission latency between the first device and the second device may be determined based on the data sending time and the data receiving time. For example, when the second audio data is audio data received by the second device from the first device over an air interface, the testing device may record a data receiving time when starting to obtain the second audio data through an audio cable. Alternatively, when the second audio data is recorded audio data obtained by using the audio acquisition module to perform audio acquisition on audio data received by the second device from the first device over an air interface, a time at which the audio acquisition module starts recording is the data receiving time. No hardware reference clock needs to be used in the foregoing time recording, and therefore implementation costs are low.

The following describes the testing system in detail by using an example.

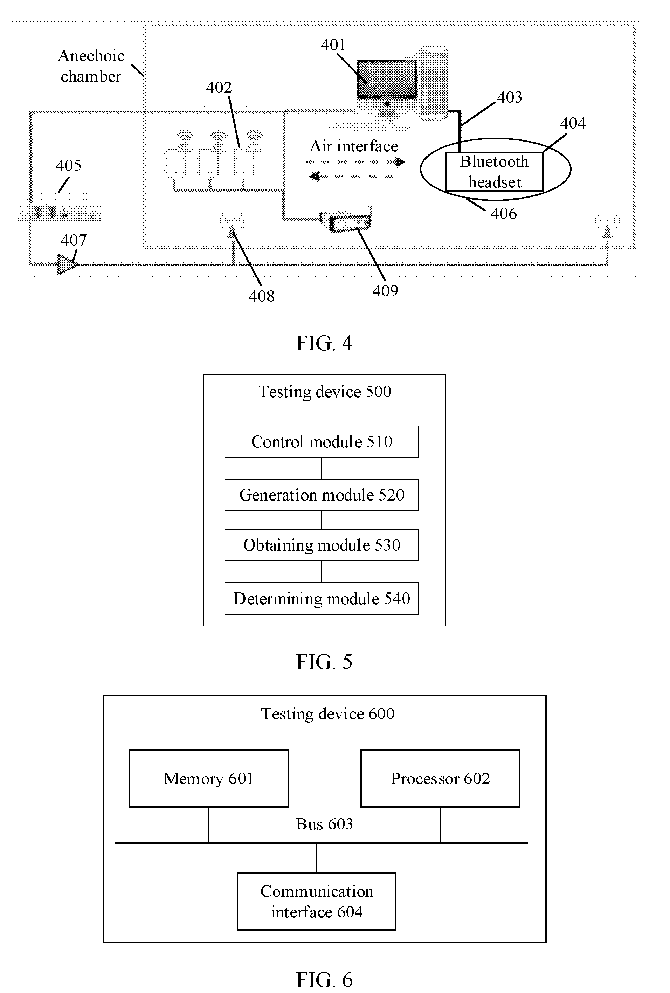

FIG. 4 is a diagram of a structure of another testing system according to an embodiment of this application. The testing system mainly includes an interference module, an air interface data obtaining module, an audio acquisition module, automated test software, and a testing device 401. For example, the interference module includes a playback instrument 405, an attenuator 407, and an antenna 408. The interference module is configured to provide all-scenario interference for devices under test (a first device and a second device) based on an interference scenario model, that is, generate a first interference signal. In embodiments of this application, the first device and the second device are located in a test environment, and the interference module applies an interference signal to the first device and the second device by using the antenna 408. In embodiments of this application, the test environment is an anechoic chamber, the first device is exemplarily a mobile phone 402, and the second device is exemplarily a Bluetooth headset 404. In addition, In addition, the testing device 401 may control the playback instrument 405 to generate the first interference signal based on the interference scenario model and set signal strength of the first interference signal.

In embodiments of this application, the testing device 401 controls the mobile phone 402 and the Bluetooth headset 404 to enter a pairing mode to establish a Bluetooth connection, and then the testing device 401 controls the mobile phone 402 to play a preset single-tone file via Bluetooth. For example, the audio acquisition module is an audio cable 403. The testing device 401 is connected to the Bluetooth headset 404 through the audio cable 403, so as to directly acquire a sound source of the Bluetooth headset in real time and transmit the acquired sound source (the second audio data) to the testing device 401. The automated test software in the testing device 401 processes the second audio data to obtain a second anti-interference parameter.

In embodiments of this application, the testing system further includes a pose adjustment module, configured to adjust a pose of the second device. In embodiments of this application, for example, the pose adjustment module is a 360° turntable. Further, for example, the testing system further includes a distance adjustment module, configured to adjust a distance between the first device and the second device. In embodiments of this application, for example, the distance adjustment module is a program-controlled slide rail, and the distance adjustment module may alternatively be another implementation. This is not limited. Referring to FIG. 4, the Bluetooth headset 404 is placed on a 360° turntable 406, the mobile phone 402 is placed on a program-controlled slide rail in the anechoic chamber, and the testing device 401 may control the program-controlled slide rail to control a distance between the mobile phone 402 and the 360° turntable 406 to simulate an actual signal attenuation scenario of a user. The testing device 401 may further control a rotation time and a rotation angle of the 360° turntable 406, to test audio quality of the Bluetooth headset 404 during 360° rotation.

In embodiments of this application, for example, a packet capture tool is used as the air interface data obtaining module, and the air interface data obtaining module may alternatively be another implementation. This is not limited. Referring to FIG. 4, when the mobile phone 402 plays a single-tone file via Bluetooth, data transmitted by the mobile phone 402 over an air interface is further captured by using a packet capture tool 409, and the automated test software obtains a first anti-interference parameter based on the data transmitted over the air interface. After the test ends, the testing device may automatically output an anti-interference capability test report (including the first anti-interference parameter and the second anti-interference parameter). By viewing the report, anti-interference capabilities of the mobile phone 402 and the Bluetooth headset 404 can be clearly identified at a glance.

In embodiments of this application, the testing system may evaluate an anti-interference capability of a wireless communication device from a plurality of dimensions (air interface data transmission accuracy, a quantity of audio stutters, an interference shielding time, an interference recovery time, transmission latency, and the like). In addition, interference strength is adjustable, abundant interference models are provided, and scalability is strong. The test dimensions are diversified, and test conclusions are more reliable. In addition, the automated test software supports Harmony (Harmony) and Android (Android) systems, and a modular interface is conducive to efficient development of automated test cases, thereby facilitating porting and extension of test cases and test scenarios.

In a possible embodiment, values are assigned to the different first anti-interference parameter and second anti-interference parameter, and anti-interference scores of the first device and the second device may be obtained based on the assigned values, so that a user can learn, based on the anti-interference scores, anti-interference capabilities of the first device and the second device. For example, for different interference scenarios, different evaluation weights may be set for the different first anti-interference parameter and second anti-interference parameter, and anti-interference scores of the first device and the second device may be obtained based on the assigned values and the evaluation weights.

In this application, when NearLink transmission is used as an air interface transmission manner between the first device and the second device in this application, establishment of an anti-interference capability standard of NearLink can be promoted by applying the testing method in embodiments of this application. A set of standard interference sources is designed for NearLink. A series of anti-interference metrics in this set of models need to meet a specific standard. In addition, a portable and extensible automated test platform is designed to provide an anti-interference capability evaluation standard of NearLink, thereby facilitating research and development of the NearLink technology.

The foregoing is a detailed description of the method in embodiments of this application. The following describes apparatuses provided in embodiments of this application.

FIG. 5 and FIG. 6 are diagrams of structures of possible apparatuses according to embodiments of this application. A testing device shown in FIG. 5 may be configured to implement functions of the testing method embodiment shown in FIG. 1B, and therefore can also implement beneficial effects of the testing method embodiment. In embodiments of this application, the testing device may be an electronic device, or may be a module (for example, a chip) used in the electronic device. A testing device shown in FIG. 6 may be configured to implement functions of the testing method embodiment shown in FIG. 1B therefore can also implement beneficial effects of the testing method embodiment. In embodiments of this application, the testing device may be an electronic device, or may be a module (for example, a chip) used in the electronic device.

FIG. 5 is a diagram of a structure of a testing device according to an embodiment of this application. The testing device 500 includes a control module 510, a generation module 520, an obtaining module 530, and a determining module 540. The testing device 500 is configured to implement functions of the testing method embodiment shown in FIG. 1B. Alternatively, the testing device 500 may include a module configured to implement any function or operation in the testing method embodiment shown in FIG. 1B. The module may be completely or partially implemented by using software, hardware, firmware, or any combination thereof.

When the testing device 500 is configured to implement the functions in the method embodiment shown in FIG. 1B, the control module 510 is configured to control a first device to send, over an air interface, first data to a second device. The generation module 520 is configured to generate a first interference signal based on a scenario factor of an interference scenario, where the scenario factor of the interference scenario is used to represent a characteristic of the interference scenario. The obtaining module 530 is configured to obtain data transmitted over the air interface. The determining module 540 is configured to determine a first anti-interference parameter of each of the first device and the second device based on the data transmitted over the air interface.

In embodiments of this application, the testing device 500 controls the first device to send, over the air interface, data to the second device, and generates the first interference signal, so as to obtain data transmitted over the air interface under an effect of the first interference signal. The first anti-interference parameter of each of the first device and the second device can be determined based on the data transmitted over the air interface, so that the testing device 500 can implement an automated anti-interference test on a wireless communication device, and improve a degree of automation in the anti-interference tests and testing efficiency of the wireless communication device.

In a possible implementation, when the first data is first audio data, the obtaining module 530 is further configured to obtain second audio data received by the second device from the first device over an air interface. The determining module 540 is further configured to determine a quantity of audio stutters based on the first audio data and the second audio data.

In a possible implementation, in terms of determining the quantity of audio stutters based on the first audio data and the second audio data, the determining module 540 is specifically configured to:
determine a first feature value corresponding to each audio frame in the first audio data;
determine a second feature value corresponding to each audio frame in the second audio data; and
determine the quantity of audio stutters based on the first feature value and the second feature value.

In a possible implementation, the obtaining module 530 is further configured to obtain a first distance between the first device and the second device. The first anti-interference parameter is an anti-interference parameter corresponding to a distance between the first device and the second device being the first distance.

In a possible implementation, the obtaining module 530 is further configured to obtain a first rotation angle of the second device. The first anti-interference parameter is an anti-interference parameter corresponding to a rotation angle of the second device being the first rotation angle.

For descriptions of the foregoing modules, refer to the descriptions of the foregoing embodiments. Details are not described herein.

FIG. 6 is a diagram of a structure of another testing device according to an embodiment of this application. The testing device 600 includes a memory 601, a processor 602, a communication interface 604, and a bus 603. The memory 601, the processor 602, and the communication interface 604 are communicatively connected to each other through the bus 603.

Optionally, the testing device 600 further includes a display (not shown), and the display is communicatively connected to the memory 601, the processor 602, and the communication interface 604 through the bus 603. The display is configured to output information to interact with a user, for example, a voice output or a display output.

The memory 601 may be a read-only memory (Read Only Memory, ROM), a static storage device, a dynamic storage device, or a random access memory (Random Access Memory, RAM). The memory 601 may store a program. When the program stored in the memory 601 is executed by the processor 602, the processor 602 and the communication interface 604 are configured to perform steps of the testing method in any embodiment of this application.

The processor 602 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the testing device in any embodiment of this application, or perform the testing method in any embodiment of this application.

The processor 602 may alternatively be an integrated circuit chip and has a signal processing capability. In an implementation process, the steps of the testing method in any embodiment of this application may be completed by using a hardware integrated logic circuit in the processor 602, or by using instructions in a form of software. The processor 602 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the testing method, steps, and logical block diagrams disclosed in embodiments of this application. The general-purpose processor may be a microprocessor, or the processor may be any conventional processor or the like. The steps of the testing method in any embodiment of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory 601. The processor 602 reads information in the memory 601, and completes, in combination with hardware of the processor 602, functions that need to be performed by units included in the testing device in any embodiment of this application, or performs the testing method in any embodiment of this application.

The communication interface 604 uses a transceiver apparatus, for example, but not limited to, a transceiver, so as to implement communication between the testing device 600 and another device or a communication network. For example, second audio data may be obtained by using the communication interface 604.

The bus 603 may include a path for transferring information between components (for example, the memory 601, the processor 602, and the communication interface 604) of the testing device 600. In several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

This application further provides a testing system. The testing system includes a first device, a second device, an interference module, an air interface data obtaining module, and the testing device according to any one of the foregoing embodiments. The interference module is configured to generate a first interference signal; and the air interface data obtaining module is configured to acquire data transmitted by the first device over an air interface.

In embodiments of this application, the testing system may be used to implement an automated anti-interference test on wireless communication devices (to be specific, the first device and the second device), thereby improving a degree of automation in anti-interference tests and testing efficiency of the wireless communication devices.

In a possible implementation, when first data sent by the first device to the second device is first audio data, the system further includes an audio acquisition module, configured to acquire second audio data received by the second device from the first device over an air interface.

In this solution, the second audio data can be obtained by using the audio acquisition module. In this way, the testing device can determine a quantity of audio stutters based on the first audio data sent by the first device and the second audio data received by the second device. Determining the quantity of audio stutters based on the audio data achieves high accuracy and a low false positive rate. For example, the audio acquisition module may be an audio cable or an audio recording device.

In a possible implementation, the testing system further includes a pose adjustment module, configured to adjust a pose of the second device. The pose may be understood as a rotation angle of the second device. The rotation angle may be a rotation angle in a left-right direction, or may be a rotation angle in an up-down direction, or may be a rotation angle in both the up-down and left-right directions. For example, the pose adjustment module may be a 360° turntable or a gimbal.

In a possible implementation, the testing system further includes a distance adjustment module, configured to adjust a distance between the first device and the second device. For example, the distance adjustment module may be a program-controlled slide rail or the like.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a read-only memory (Read-only Memory, ROM), a random access memory (Random Access Memory, RAM), or a magnetic medium, for example, a floppy disk, a hard disk, a magnetic tape, a magnetic disk, or an optical medium, such as a digital versatile disc (Digital Versatile Disc, DVD), or a semiconductor medium, such as a solid-state disk (Solid-State Disk, SSD).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A testing method, wherein the method comprises:
controlling a first device to send, over an air interface, first data to the second device;
generating a first interference signal based on a scenario factor of an interference scenario, wherein the scenario factor of the interference scenario is used to represent a characteristic of the interference scenario;
obtaining data transmitted over the air interface; and
determining a first anti-interference parameter of each of the first device and the second device based on the data transmitted over the air interface.

2. The method according to claim 1, wherein when the first data is first audio data, the method further comprises:
obtaining second audio data received by the second device from the first device over an air interface; and
determining a quantity of audio stutters based on the first audio data and the second audio data.

3. The method according to claim 2, wherein the determining the quantity of audio stutters based on the first audio data and the second audio data comprises:
determining a first feature value corresponding to each audio frame in the first audio data;
determining a second feature value corresponding to each audio frame in the second audio data; and
determining the quantity of audio stutters based on the first feature value and the second feature value.

4. The method according to any one of claims 1 to 3, wherein the method further comprises:
obtaining a first distance between the first device and the second device; wherein
the first anti-interference parameter is an anti-interference parameter corresponding to a distance between the first device and the second device being the first distance.

5. The method according to any one of claims 1 to 4, wherein the method further comprises:
obtaining a first rotation angle of the second device; wherein
the first anti-interference parameter is an anti-interference parameter corresponding to a rotation angle of the second device being the first rotation angle.

6. The method according to any one of claims 1 to 5, wherein an air interface transmission manner between the first device and the second device comprises at least one of the following: NearLink, Bluetooth, wireless local area network, ZigBee, or near field communication NFC.

7. A testing device, comprising:
a control module, configured to control the first device to send, over an air interface, first data to the second device;
a generation module, configured to generate a first interference signal based on a scenario factor of an interference scenario, wherein the scenario factor of the interference scenario is used to represent a characteristic of the interference scenario;
an obtaining module, configured to obtain data transmitted over the air interface; and
a determining module, configured to determine a first anti-interference parameter of each of the first device and the second device based on the data transmitted over the air interface.

8. The device according to claim 7, wherein when the first data is first audio data,
the obtaining module is further configured to obtain second audio data received by the second device from the first device over an air interface; and
the determining module is further configured to determine a quantity of audio stutters based on the first audio data and the second audio data.

9. The device according to claim 8, wherein in terms of determining the quantity of audio stutters based on the first audio data and the second audio data, the determining module is specifically configured to:
determine a first feature value corresponding to each audio frame in the first audio data;
determine a second feature value corresponding to each audio frame in the second audio data; and
determine the quantity of audio stutters based on the first feature value and the second feature value.

10. The device according to any one of claims 7 to 9, wherein the obtaining module is further configured to obtain a first distance between the first device and the second device; wherein
the first anti-interference parameter is an anti-interference parameter corresponding to a distance between the first device and the second device being the first distance.

11. The device according to any one of claims 7 to 10, wherein the obtaining module is further configured to obtain a first rotation angle of the second device; wherein
the first anti-interference parameter is an anti-interference parameter corresponding to a rotation angle of the second device being the first rotation angle.

12. The device according to any one of claims 7 to 11, wherein an air interface transmission manner between the first device and the second device comprises at least one of the following: NearLink, Bluetooth, wireless local area network, ZigBee, or near field communication NFC.

13. A testing device, comprising a processor and a memory, wherein the processor is connected to the memory, the memory is configured to store program code, and the processor is configured to invoke the program code, to perform the testing method according to any one of claims 1 to 5.

14. A testing system, comprising a first device, a second device, an interference module, an air interface data obtaining module, and the testing device according to any one of claims 7 to 13, wherein;
the interference module is configured to generate a first interference signal; and
the air interface data obtaining module is configured to acquire data transmitted by the first device over an air interface.

15. The system according to claim 14, wherein when first data sent by the first device to the second device is first audio data, the system further comprises an audio acquisition module, configured to acquire second audio data received by the second device from the first device over an air interface.

16. The system according to claim 14 or 15, wherein the system further comprises a pose adjustment module, configured to adjust a pose of the second device.

17. The system according to any one of claims 14 to 16, wherein the system further comprises a distance adjustment module, configured to adjust a distance between the first device and the second device.

18. A computer-readable storage medium, wherein the computer-readable storage medium stores a computer program, and the computer program is executed by a processor, to implement the testing method according to any one of claims 1 to 6.
